# EUROPÄISCHE PATENTSCHRIFT

(11) **EP 4 607 292 B1**
(45) Veröffentlichungstag und Bekanntmachung des Hinweises auf die Patenterteilung: **22.04.2026**
(21) Anmeldenummer: 25150045.0
(22) Anmeldetag: 02.01.2025
(51) Int. Cl.: G05B 9/03, G05B 19/042

(54) **SENSORANORDNUNG FÜR SICHERHEITSKRITISCHE ANWENDUNGEN UND VERFAHREN ZUM BEREITSTELLEN VON SENSORDATEN UND DIAGNOSEINFORMATIONEN**
SENSOR ARRANGEMENT FOR SAFETY-CRITICAL APPLICATIONS AND METHOD FOR PROVIDING SENSOR DATA AND DIAGNOSTIC INFORMATION
ENSEMBLE CAPTEUR POUR APPLICATIONS CRITIQUES EN TERMES DE SÉCURITÉ ET PROCÉDÉ DE FOURNITURE DE DONNÉES DE CAPTEUR ET D'INFORMATIONS DE DIAGNOSTIC

(30) Priorität: 20.02.2024 DE 102024104708
(43) Veröffentlichungstag der Anmeldung: 27.08.2025
(73) Patentinhaber: SICK AG, 79183 Waldkirch (DE)
(72) Erfinder: Sellmer, Christian, 78166 Donaueschingen (DE); Zwölfer, Ulrich, 79183 Waldkirch (DE)
(74) Vertreter: Manitz Finsterwald Patent- und Rechtsanwaltspartnerschaft mbB

(56) Entgegenhaltungen:
- EP-A2- 2 869 147
- DE-A1- 102013 200 330

## Beschreibung

Die Erfindung betrifft eine Sensoranordnung für sicherheitskritische Anwendungen und ein Verfahren zum Bereitstellen von Sensordaten und Diagnoseinformationen an eine Datenverarbeitungseinheit einer Sensoranordnung für sicherheitskritische Anwendungen.

Die Druckschrift DE 10 2013 200330 A1 offenbart beispielsweise eine Sensoranordnung für sicherheitskritische Anwendungen gemäß dem Oberbegriff des Anspruchs 1 und ein Verfahren zum Bereitstellen von Sensordaten und Diagnoseinformationen gemäß dem Oberbegriff des Anspruchs 14. Die Druckschrift EP 2 869 147 A2 beschreibt eine ähnliche Anordnungen und ein ähnliches Verfahren.

Eine bekannte Sensoranordnung für sicherheitskritische Anwendungen oder (Teil-)Prozesse umfasst eine übergeordnete Datenverarbeitungseinheit oder serielle Schnittstelle ("Serial-Peripheral Interface SPI" oder Client bzw. Master), die mit einer Sensoreinheit verbunden ist, die zumindest zwei Sensorkanäle (Server bzw. Slaves) zum Erfassen erster und zweiter Sensordaten umfasst.

Um eine ausreichende Sicherheit zu gewährleisten, ruft die Datenverarbeitungseinheit der herkömmlichen Sensoranordnung die ersten und zweiten Sensordaten von den zwei Sensorkanälen der Sensoreinheit ab und vergleicht diese miteinander. Bei diesem sog. Client-seitigen "Crosscheck" werden Informationen erzeugt, die angeben, ob die Sensordaten fehlerhaft sind oder nicht, d.h. ob die Sensordaten ein gewisses Vertrauensniveau erfüllen. Dies hat unter anderem den Nachteil, dass vergleichsweise große Datenmengen von der Sensoreinheit an die Datenverarbeitungseinheit übermittelt werden müssen und die Datenverarbeitungseinheit zum Empfangen und Verarbeiten dieser Daten ausgelegt sein muss.

Es ist daher eine Aufgabe der Erfindung, eine effizientere Sensoranordnung für sicherheitskritische Anwendungen und ein effizienteres Verfahren zum Bereitstellen von Sensordaten und Diagnoseinformationen an eine Datenverarbeitungseinheit einer Sensoranordnung für sicherheitskritische Anwendungen bereitzustellen.

Diese Aufgabe wird erfindungsgemäß durch die Merkmale des Anspruchs 1 und insbesondere dadurch gelöst, dass die Sensoranordnung für sicherheitskritische Anwendungen eine Datenverarbeitungseinheit umfasst, die mit einer Sensoreinheit verbunden ist. Die Sensoreinheit umfasst zumindest zwei Sensorkanäle zum Erfassen erster und zweiter Sensordaten und eine Diagnoseeinheit zum Erzeugen von Diagnoseinformationen auf Basis der ersten und zweiten Sensordaten. Der erste Sensorkanal der zumindest zwei Sensorkanäle umfasst keine Diagnoseeinheit (der zuvor genannten Art). Der zweite Sensorkanal der zumindest zwei Sensorkanäle umfasst die Diagnoseeinheit. Der zweite Sensorkanal ist dazu eingerichtet und ausgebildet, die Diagnoseinformationen an die Datenverarbeitungseinheit zu übertragen. Die Diagnoseeinheit des zweiten Sensorkanals ist dazu eingerichtet und ausgebildet, die ersten Sensordaten und die zweiten Sensordaten an die Datenverarbeitungseinheit zu übertragen. Zusätzlich kann auch der erste Sensorkanal dazu eingerichtet und ausgebildet sein, die ersten Sensordaten oder die zweiten Sensordaten an die Datenverarbeitungseinheit zu übertragen.

Das heißt, die Prüfung der Sensordaten erfolgt nicht in der Datenverarbeitungseinheit, sondern bereits in einem der Sensorkanäle. Dadurch kann die Rechenlast auf die Datenverarbeitungseinheit erheblich reduziert und ihre Ansprechzeit verbessert werden. Auch können weniger hohe Anforderungen an die Hardware und/oder Software der Datenverarbeitungseinheit gestellt werden, d.h. sie kann einfacher aufgebaut und ausgelegt werden.

Des Weiteren müssen dadurch, dass die Datenverarbeitungseinheit das Ergebnis der Prüfung der Sensordaten, d.h. die bereits erzeugten Diagnoseinformationen, von der Sensoreinheit erhält, nicht mehrere Sätze an Sensordaten, sondern nur ein Satz Sensordaten von der Sensoreinheit an die Datenverarbeitungseinheit übermittelt werden, wodurch wiederum die Kommunikation zwischen der Datenverarbeitungseinheit und der Sensoreinheit reduziert werden kann. Insbesondere sendet nur ein Sensorkanal nur einen Satz von Sensordaten an die Datenverarbeitungseinheit und sendet nur ein Sensorkanal die Diagnosedaten an die Datenverarbeitungseinheit. Dies wirkt sich positiv auf die Ansprechzeit, das EMV-Verhalten und den Stromverbrauch der Sensoranordnung aus. Zudem können an den Kommunikationskanal zwischen der Datenverarbeitungseinheit und der Sensoreinheit (z.B. einen Datenbus) weniger hohe Anforderungen gestellt werden.

Unter einer Sensoreinheit ist in diesem Zusammenhang eine Messeinrichtung zu verstehen, die dazu eingerichtet ist, sicherheitskritische Anwendungsinformationen (Sensordaten) wie zum Beispiel Abstandsinformationen zu erzeugen und an die Datenverarbeitungseinheit (serielle Schnittstelle) zu übermitteln. Unter einer sicherheitskritischen oder sicherheitsrelevanten Anwendung ist eine Anwendung zu verstehen, bei der mit möglichst hoher, bevorzugt nahezu absoluter Sicherheit gewährleistet sein muss, dass die mit der Sensoreinheit erzeugten Anwendungsinformationen nicht fehlerhaft sind.

Weitere Ausführungsformen sind in den Ansprüchen, der Beschreibung und den beigefügten Zeichnungen angegeben. Im Folgenden ist unter "ausgebildet" immer "eingerichtet und ausgebildet" zu verstehen.

Gemäß einer Ausführungsform ist der zweite Sensorkanal dazu ausgebildet, die ersten Sensordaten oder die zweiten Sensordaten und die Diagnoseinformationen an die Datenverarbeitungseinheit zu übertragen. Das bedeutet der die Diagnoseeinheit umfassende Sensorkanal ist sowohl für den Datenabgleich als auch die Übertragung des Satzes von Sensordaten und des Diagnoseergebnisses an die Datenverarbeitungseinheit zuständig. Dadurch kann der erste Sensorkanal vergleichsweise einfach aufgebaut sein.

Gemäß einer Ausführungsform ist der zweite Sensorkanal dazu ausgebildet, Sensordaten von dem ersten Sensorkanal zu erhalten und auf Basis der erhaltenen Sensordaten und von dem zweiten Sensorkanal erfassten Sensordaten (d.h. eigens erfassten Sensordaten) die Diagnoseinformationen mittels der Diagnoseeinheit zu erzeugen.

Gemäß einer Ausführungsform ist der erste Sensorkanal dazu ausgebildet, die ersten Sensordaten oder die zweiten Sensordaten und die Diagnoseinformationen an die Datenverarbeitungseinheit zu übertragen. Das heißt der die Diagnoseeinheit nicht umfassende Sensorkanal kann für die Übertragung der Daten an die Datenverarbeitungseinheit zuständig sein, während der die Diagnoseeinheit umfassende Sensorkanal für die Erzeugung der Diagnoseinformationen zuständig ist. Dadurch wird die Rechenlast gleichmäßiger auf die Sensorkanäle verteilt.

Gemäß einer Ausführungsform ist der erste Sensorkanal dazu ausgebildet, von dem ersten Sensorkanal erfasste Sensordaten (d.h. eigens erfasste Sensordaten) an den zweiten Sensorkanal zu übertragen und von dem zweiten Sensorkanal erfasste Sensordaten sowie durch die Diagnoseeinheit des zweiten Sensorkanals erzeugte Diagnoseinformationen von dem zweiten Sensorkanal zu empfangen.

Gemäß einer Ausführungsform ist der zweite Sensorkanal dazu ausgebildet, die ersten Sensordaten oder die zweiten Sensordaten an die

Datenverarbeitungseinheit zu übertragen und der erste Sensorkanal ist dazu ausgebildet, die Diagnoseinformationen an die Datenverarbeitungseinheit zu übertragen. Das heißt der die Diagnoseeinheit umfassende Sensorkanal ist für die Übertragung der Daten an die Datenverarbeitungseinheit zuständig, während der die Diagnoseeinheit nicht umfassende Sensorkanal für die Erzeugung der Diagnoseinformationen zuständig ist. Entsprechend wird auch hier eine Verteilung der Rechenlast erzielt.

Gemäß einer alternativen Ausführungsform ist der erste Sensorkanal dazu ausgebildet, die ersten Sensordaten oder die zweiten Sensordaten an die Datenverarbeitungseinheit zu übertragen und der zweite Sensorkanal ist dazu ausgebildet, die Diagnoseinformationen an die Datenverarbeitungseinheit zu übertragen.

Nachfolgend kann - im Gegensatz zum oben erläuterten Beispiel - nicht nur der zweite, sondern auch der erste Sensorkanal eine Diagnoseeinheit aufweisen.

Gemäß einer Ausführungsform umfassen zwei oder mehr der zumindest zwei Sensorkanäle eine eigene Diagnoseeinheit, insbesondere umfassen also der erste und der zweite Sensorkanal jeweils eine Diagnoseeinheit, die dazu ausgebildet ist, Diagnoseinformationen auf Basis der ersten und zweiten Sensordaten zu erzeugen. Folglich können der Datenverarbeitungseinheit zwei oder mehr Sätze von Diagnoseinformationen bereitgestellt werden, und die Datenverarbeitungseinheit kann dazu ausgebildet sein, die zwei oder mehr Sätze von Diagnoseinformationen abzugleichen. Dadurch kann die Prozess-Sicherheit zusätzlich erhöht werden.

Gemäß einer Ausführungsform sind die Datenverarbeitungseinheit und die Sensoreinheit separate Einheiten, das heißt sie sind baulich voneinander getrennt angeordnet. Dies erleichtert die Wartung bzw. den Austausch der Sensoreinheit und/oder der Datenverarbeitungseinheit.

Gemäß einer Ausführungsform weisen die Datenverarbeitungseinheit und die Sensoreinheit jeweils ein eigenes Gehäuse auf. Das Erzeugen der Diagnoseinformationen findet daher ausschließlich im Gehäuse der Sensoreinheit statt. Zusätzlich oder alternativ hierzu können die Datenverarbeitungseinheit und die Sensoreinheit unterschiedliche Platinen aufweisen. Es ist aber auch denkbar, dass die Datenverarbeitungseinheit und die Sensoreinheit auf derselben Platine angeordnet sind, wobei die Datenverarbeitungseinheit einen SPI-Master-Chip umfasst und die Sensoreinheit einen Sensor-Chip umfasst. Das heißt die beiden Chips sind hier auf einer gemeinsamen Platine integriert. Der Sensor-Chip kann zwei Sensorkanäle der oben genannten Art umfassen, wobei jeder Sensorkanal einen SPI-Slave umfassen und/oder dessen Funktion ausführen kann.

Gemäß einer Ausführungsform umfasst der erste und/oder zweite Sensorkanal einen Sensor zum Erzeugen der ersten und/oder zweiten Sensordaten. Beispielsweise weist der erste Sensorkanal einen ersten Sensor zum Erzeugen der ersten Sensordaten und der zweite Sensorkanal einen zweiten Sensor zum Erzeugen der zweiten Sensordaten auf.

Wenn zum Beispiel drei oder mehr Sensorkanäle vorhanden sind, können auch die drei oder mehr der Sensorkanäle jeweils einen oder mehrere Sensoren aufweisen. Auch ist es möglich, dass einer oder mehrere der zumindest zwei Sensorkanäle zwei oder mehr Sensoren aufweisen.

Die Sensoren können gleicher oder unterschiedlicher Art sein, das heißt, sie können Sensordaten gleicher oder unterschiedlicher Art bzw. Datenstruktur erzeugen. Bevorzugt geben die ersten und zweiten Sensordaten dieselbe physikalische oder chemische Messgröße, beispielsweise einen Abstand zu einem Objekt oder Erzeugnis, eine Temperatur oder dergleichen, an.

Auch ist es möglich, dass der erste Sensorkanal und der zweite Sensorkanal einen einzigen gemeinsamen Sensor zum Erzeugen der ersten und zweiten Sensordaten umfassen, wobei der Sensor zum Erzeugen der ersten und zweiten Sensordaten auf zwei verschiedene Arten oder zumindest separat und zweifach auf dieselbe Art (z.B. durch unterschiedliche Auswertemittel, wie Analog-Digital-Wandler) ausgelesen werden kann.

Gemäß einer Ausführungsform erfassen die zumindest zwei Sensorkanäle denselben sicherheitskritischen Prozess. Bei dem sicherheitskritischen Prozess handelt es sich beispielsweise um einen Prozess des Sortierens von Erzeugnissen, insbesondere des Sortierens von Paketen verschiedener Größe, ein chemisches Verfahren, bei dem kritische Prozessparameter in einem bestimmten Bereich gehalten werden müssen, ein Steuern einer potentiell für eine Person gefährliche Maschine, ein Überwachen eines Schutzgitters, ein Überwachen einer Lichtschranke und/oder eine Steuerung von Zweihandschaltern.

Gemäß einer Ausführungsform umfasst der erste und/oder zweite Sensorkanal einen linearen Encoder und/oder einen rotativen Encoder zum Erzeugen von Positionsinformationen.

Gemäß einer Ausführungsform ist die Diagnoseeinheit dazu ausgebildet, die Diagnoseinformationen als ein binäres Signal oder als ein Schaltsignal zu erzeugen, das die Datenverarbeitungseinheit beim Empfang dazu veranlasst, einen Betriebszustand der Sensoranordnung zu ändern. Das binäre Signal gibt beispielsweise an, ob die ersten und zweiten Sensorinformationen übereinstimmen oder nicht. Dadurch müssen besonders wenig Daten zwischen der Sensoreinheit und der Datenverarbeitungseinheit übertragen werden. Das Ändern des Betriebszustands beinhaltet zum Beispiel, dass die Datenverarbeitungseinheit veranlasst, dass im Falle eines Fehlers der sicherheitskritische Prozess gestoppt wird. Dies ermöglich ein besonders schnelles Reagieren auf einen Fehlerzustand.

Gemäß einer Ausführungsform ist die Diagnoseeinheit dazu ausgebildet, die Diagnoseinformationen durch Abgleichen der ersten und zweiten Sensordaten zu erzeugen. Der Abgleich kann mittels Subtraktion der ersten Sensordaten von den zweiten Sensordaten (oder umgekehrt), oder einem anderen, für die Sensordaten geeigneten mathematischen Vorgang erfolgen. Die Diagnoseinformationen, insbesondere das Ergebnis der Gegenprüfung, kann beispielsweise als Differenz der ersten und zweiten Sensorinformationen mit einer vorbestimmten Auflösung an die Datenverarbeitungseinheit übertragen werden.

Gemäß einer Ausführungsform geben in einem Fall, in dem eine Abweichung zwischen den ersten und zweiten Sensordaten einen vorbestimmten Schwellenwert überschreitet, die Diagnoseinformationen einen Fehler an, und in einem Fall, in dem eine Abweichung zwischen den ersten und zweiten Sensordaten den vorbestimmten Schwellenwert nicht überschreitet, geben die Diagnoseinformationen an, dass kein Fehler vorliegt.

Gemäß einer Ausführungsform ist der vorbestimmte Schwellenwert in einem Speicher der Diagnoseeinheit gespeichert. Der vorbestimmte Schwellenwert kann an den sicherheitskritischen Prozess angepasst sein. Der vorbestimmte Schwellenwert kann auch dynamisch im Laufe der Überwachung des sicherheitskritischen Prozesses angepasst bzw. aktualisiert werden. In einem Fall, in dem mehrere sicherheitskritische Prozesse gleichzeitig überwacht werden, können mehrere vorbestimmte Schwellenwerte von der Diagnoseeinheit oder mehreren Diagnoseeinheiten vorgehalten werden.

Gemäß einer Ausführungsform entspricht der vorbestimmte Schwellenwert einer Abweichung zwischen den ersten und zweiten Sensordaten von 0,01% bis 25%, insbesondere von 0,1% bis 10%, insbesondere von 1% bis 5%.

Gemäß einer Ausführungsform ist der erste und/oder zweite Sensorkanal dazu ausgebildet, die ersten Sensordaten oder die zweiten Sensordaten in Reaktion auf ein Empfangen einer Sensordatenanfrage von der Datenverarbeitungseinheit an die Datenverarbeitungseinheit zu übertragen. Das heißt der erste und/oder zweite Sensorkanal sendet nur auf Anfrage, was besonders stromsparend ist.

Die Datenverarbeitungseinheit kann dazu ausgebildet sein, die Sensordatenanfrage gleichzeitig an den ersten Sensorkanal und den zweiten Sensorkanal zu übertragen, sodass der erste und zweite Sensorkanal die ersten und zweiten Sensordaten im Wesentlichen gleichzeitig erfassen. Die Sensorkanäle können dazu die Sensordatenanfrage über dieselbe Datenleitung erhalten. Das heißt es entsteht kein Zeitversatz beim Erhalt der Sensordaten, wodurch die Abweichung zwischen den Sensordaten verringert werden kann.

Gemäß einer Ausführungsform ist der erste und/oder zweite Sensorkanal dazu ausgebildet, die ersten Sensordaten oder die zweiten Sensordaten wiederholt an die Datenverarbeitungseinheit zu übertragen, insbesondere in vorbestimmen Zeitabständen. Dadurch kann Rechenlast von der Datenverarbeitungseinheit genommen werden, da sie keine Anfrage senden muss.

Gemäß einer Ausführungsform sind die Datenverarbeitungseinheit und die Sensoreinheit und/oder die zumindest zwei Sensorkanäle über einen Kommunikationskanal verbunden. Der Kommunikationskanal kann bevorzugt eine Datenleitung umfassen. Die Datenleitung kann beispielsweise eine Länge von zumindest 1 Meter, 2 Metern, 4 Metern oder mehr aufweisen und als Kabel ausgebildet sein. Die zwischen Diagnoseeinheit und Datenverarbeitungseinheit übertragenen Daten werden dementsprechend über den Kommunikationskanal übertragen. Der Kommunikationskanal ist beispielsweise ein synchroner serieller Datenbus, eine HDSL-Leitung und/oder eine Punkt-zu-Punkt-Kommunikation.

Der Begriff HDSL steht im vorliegenden Zusammenhang für "HIPERFACE DSL", und die HDSL-Leitung bezeichnet insbesondere eine DSL-artige Leitung des HIPERFACE-Systems der Sick AG. Die HDSL-Leitung ist also ein Eigenname. Die HDSL-Leitung kann die Sensordaten und die Diagnosedaten, insbesondere mittels einer DSL-ähnlichen Übertragungstechnik, mit einer Vielzahl von gleichzeitig genutzten Trägerfrequenzen übertragen.

Wenn der erste und zweite Sensorkanal sowie die Datenverarbeitungseinheit über die HDSL-Leitung verbunden sind, kann jeweils einer der zumindest zwei Sensorkanäle inaktiv bzw. deaktiviert sein, während der andere der zumindest zwei Sensorkanäle aktiviert ist. Dies ermöglicht eine effizientere Übertragung der Sensordaten.

Gemäß einer Ausführungsform sind die Datenverarbeitungseinheit und die Sensoreinheit und die zumindest zwei Sensorkanäle über denselben Kommunikationskanal oder über separate Kommunikationskanäle miteinander verbunden. Beispielsweise ist eine Konfiguration möglich, bei der die Sensorkanäle über einen ersten Kommunikationskanal miteinander verbunden sind, und die Sensorkanäle und die Datenverarbeitungseinheit über einen von dem ersten Kommunikationskanal verschiedenen zweiten Kommunikationskanal miteinander verbunden sind. Es ist aber auch denkbar, dass die Sensorkanäle über denselben Kommunikationskanal miteinander verbunden sind, über den sie auch mit der Datenverarbeitungseinheit verbunden sind. Das Bereitstellen eines gemeinsamen Kommunikationskanals senkt die Gesamtkosten der Anordnung, während das Bereitstellen separater Kommunikationskanäle Redundanzen schafft.

Gemäß einer Ausführungsform umfasst die Sensoreinheit mehr als zwei, insbesondere drei oder mehr, Sensorkanäle, wobei zumindest einer der Sensorkanäle eine Diagnoseeinheit zum Erzeugen von Diagnoseinformationen auf Basis eigens erfasster Sensordaten und zumindest einem weiteren Satz Sensordaten, die von einem anderen Sensorkanal erfasst wurden, umfasst. Insbesondere kann jeder der mehr als zwei Sensorkanäle wie zuvor beschrieben ausgebildet sein.

Gemäß einer Ausführungsform weist die Sensoranordnung eine **SPI** (Serial peripheral interface)-Architektur auf, bei der die Datenverarbeitungseinheit die Funktion eines SPI-Masters erfüllt und die Sensorkanäle jeweils die Funktion eines SPI-Slaves erfüllen. Der erste und/oder zweite Sensorkanal kann entsprechend einen ersten Eingang (Chip-Select CS) zum Empfangen eines Triggers bzw. einer Sensordatenanfrage von der Datenverarbeitungseinheit, einen zweiten Eingang (SCLK) zum Empfangen eines Clock-Signals von der Datenverarbeitungseinheit, einen dritten Eingang (Serial-Data-In SDI) zum Empfangen von (Sensor-)Daten, und/oder einen Ausgang (Serial-Data-Out SDO) zum Übertragen von (Sensor-)Daten aufweisen.

Der zweite Sensorkanal (d.h. der die Diagnoseeinheit aufweisende Sensorkanal) kann Schaltmittel aufweisen, die dazu ausgebildet sind, um den dritten Eingang (SDI) und den Ausgang (SDO) des zweiten Sensorkanals zu vertauschen, wenn der erste Sensorkanal eine Sensordatenanfrage von der Datenverarbeitungseinheit empfängt. Dadurch kann der aktive erste SPI-Slave Sensordaten an den passiven zweiten SPI-Slave übertragen, was bei herkömmlichen SPI-Architekturen nicht möglich ist. Zusätzlich oder alternativ hierzu kann der erste Sensorkanal (d.h. der die Diagnoseeinheit nicht aufweisende Sensorkanal) Schaltmittel aufweisen, die dazu ausgebildet sind, um den dritten Eingang (SDI) und den Ausgang (SDO) des ersten Sensorkanals zu vertauschen, wenn der zweite Sensorkanal eine Sensordatenanfrage von der Datenverarbeitungseinheit empfängt.

Die Schaltmittel können dazu ausgebildet sein, um von dem Ausgang zu dem dritten Eingang zu schalten, wenn eine Kommunikation bzw. ein Datenaustausch mit einem anderen Sensorkanal stattfinden soll, und von dem dritten Eingang zu dem Ausgang zu schalten, wenn eine Kommunikation mit der Datenverarbeitungseinheit stattfinden soll. Die Schaltmittel sind beispielsweise ein elektrischer Schalter, welcher integraler Bestandteil des ersten bzw. zweiten Sensorkanals ist oder außerhalb des ersten bzw. zweiten Sensorkanals angeordnet ist.

Gemäß einer Ausführungsform weist die Sensoranordnung eine kaskadierte SPI-Architektur auf, bei der zumindest einer der Sensorkanäle die Funktion eines SPI-Masters für zumindest einen weiteren Sensorkanal erfüllt. Das heißt die SPI-Architektur weist drei oder mehr Ebenen auf. Beispielsweise ist eine Konfiguration möglich, bei der die Datenverarbeitungseinheit die Funktion eines SPI-Masters für den ersten und zweiten Sensorkanal erfüllt und der erste Sensorkanal die Funktion eines SPI-Masters für den zweiten Sensorkanal erfüllt oder der zweite Sensorkanal die Funktion eines SPI-Masters für den ersten Sensorkanal erfüllt. Der erste bzw. zweite Sensorkanal kann wiederum die Funktion eines SPI-Masters für einen dritten Sensorkanal erfüllen usw. Es versteht sich, dass in jeder Ebene der kaskadierten SPI-Architektur auch mehrere SPI-Slaves und mehrere SPI-Master vorgesehen sein können. In jeder Ebene kann eine separate Diagnoseeinheit vorgesehen sein, die Diagnosedaten - wie hierin beschrieben - erzeugt und an den SPI-Master der jeweils darüberliegenden Ebene sendet. Dieser SPI-Master stellt die Diagnosedaten wiederum dafür bereit, in seiner Ebene weitere Diagnosedaten zu erzeugen.

Die eingangs genannte Aufgabe wird auch durch ein Verfahren zum Bereitstellen von Sensordaten und Diagnoseinformationen an eine Datenverarbeitungseinheit einer Sensoranordnung für sicherheitskritische Anwendungen, insbesondere gemäß zumindest einem der vorherigen Ausführungsformen, gemäß dem Anspruch 14 gelöst. Die Sensoranordnung umfasst eine Datenverarbeitungseinheit, die mit einer Sensoreinheit verbunden ist, wobei die Sensoreinheit zumindest zwei Sensorkanäle und eine Diagnoseeinheit umfasst. Der zweite Sensorkanal der zumindest zwei Sensorkanäle umfasst die Diagnoseeinheit. Der erste Sensorkanal der zumindest zwei Sensorkanäle umfasst keine Diagnoseeinheit.

Das Verfahren umfasst ein Erfassen von ersten und zweiten Sensordaten durch die zwei Sensorkanäle der Sensoreinheit der Sensoranordnung, ein Erzeugen von Diagnoseinformationen auf Basis der ersten und zweiten Sensordaten durch die Diagnoseeinheit, ein Übertragen der Diagnoseinformationen an die Datenverarbeitungseinheit durch den zweiten Sensorkanal, und ein Übertragen der ersten Sensordaten und der zweiten Sensordaten an die Datenverarbeitungseinheit durch die Diagnoseeinheit.

Gemäß einer Ausführungsform umfasst das Verfahren ferner ein Empfangen einer Sensordatenanfrage von der Datenverarbeitungseinheit durch zumindest einen der Sensorkanäle, wobei das Übertragen der ersten Sensordaten oder der zweiten Sensordaten an die Datenverarbeitungseinheit durch zumindest einen der Sensorkanäle in Reaktion auf das Empfangen der Sensordatenanfrage erfolgt.

Gemäß einer Ausführungsform erfolgt das Empfangen der Sensordatenanfrage vor dem Erfassen der ersten und zweiten Sensordaten.

Gemäß einer Ausführungsform werden die ersten Sensordaten oder die zweiten Sensordaten wiederholt an die Datenverarbeitungseinheit übertragen, insbesondere in vorbestimmen Zeitabständen.

Gemäß einer Ausführungsform umfasst das Verfahren ferner ein Übertragen der ersten und/oder zweiten Sensordaten zwischen den zumindest zwei Sensorkanälen. Beispielsweise werden die ersten und/oder zweiten Sensordaten von einem eine Diagnoseeinheit aufweisenden Sensorkanal an einen keine Diagnoseeinheit aufweisenden Sensorkanal übertragen, und/oder es werden die ersten und/oder zweiten Sensordaten von einem keine Diagnoseeinheit aufweisenden Sensorkanal an einen eine Diagnoseeinheit aufweisenden Sensorkanal übertragen.

Gemäß einer Ausführungsform umfasst das Verfahren ferner ein Übertragen der Diagnoseinformationen zwischen den zumindest zwei Sensorkanälen. Beispielsweise werden die Diagnoseinformationen von einem eine Diagnoseeinheit aufweisenden Sensorkanal an einen keine Diagnoseeinheit aufweisenden Sensorkanal übertragen, und/oder es werden die Diagnoseinformationen von einem keine Diagnoseeinheit aufweisenden Sensorkanal an einen eine Diagnoseeinheit aufweisenden Sensorkanal übertragen.

Gemäß einer Ausführungsform werden erste und zweite Diagnoseinformationen auf Basis der ersten und zweiten Sensordaten durch zumindest zwei Diagnoseeinheiten erzeugt, die jeweils integraler Bestandteil eines der Sensorkanäle sind, und die ersten und zweiten Diagnoseinformationen werden an die Datenverarbeitungseinheit übertragen. Das heißt die Sensordaten werden doppelt geprüft, was die Sicherheit zusätzlich erhöht.

Die Merkmale der erfindungsgemäßen Sensoranordnung können beliebig mit den Merkmalen des erfindungsgemäßen Verfahrens kombiniert werden.

Nachfolgend wird die Erfindung beispielhaft anhand vorteilhafter Ausführungsformen unter Bezugnahme auf die beigefügten Figuren beschrieben. Es zeigen, jeweils schematisch:
- Fig. 1: eine vereinfachte Darstellung einer erfindungsgemäßen Sensoranordnung, die nach dem Prinzip einer Einzeldiagnose-Gegenprobe arbeitet,
- Fig. 2: eine vereinfachte Darstellung einer nicht unabhängig beanspruchten Sensoranordnung, die nach dem Prinzip einer symmetrischen Gegenprobe arbeitet,
- Fig. 3-5: vereinfachte Darstellungen von erfindungsgemäßen Sensoranordnungen, die nach dem Prinzip einer asymmetrischen Gegenprobe arbeiten,
- Fig. 6: eine vereinfachte Darstellung einer erfindungsgemäßen Sensoranordnung, die nach dem Prinzip einer Gegenprobe zwischen Sensoren arbeitet,
- Fig. 7: eine vereinfachte Darstellung einer erfindungsgemäßen Sensoranordnung, die eine SPI-Architektur aufweist, und
- Fig. 8: ein Ablaufplan eines erfindungsgemäßen Verfahrens zum Bereitstellen von Sensordaten und Diagnoseinformationen an eine Datenverarbeitungseinheit einer Sensoranordnung für sicherheitskritische Anwendungen.

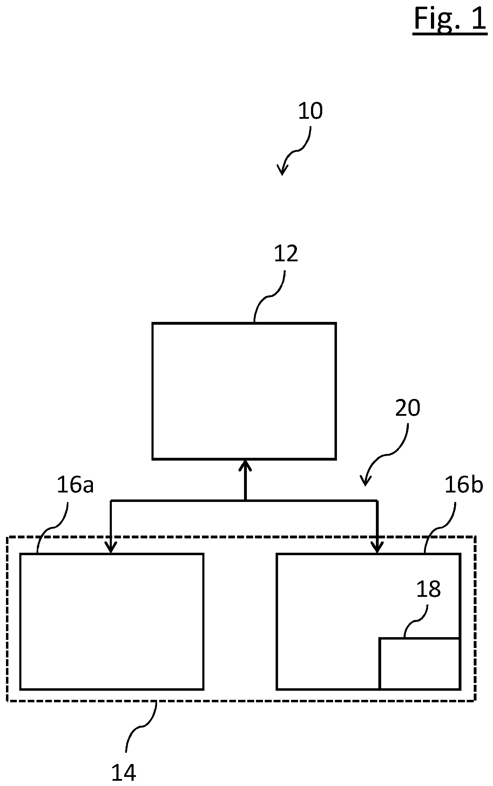

Die in der Fig. 1 dargestellte erfindungsgemäße Sensoranordnung 10 umfasst eine übergeordnete Datenverarbeitungseinheit 12, welche über einen Kommunikationskanal 20 mit einer Sensoreinheit 14 verbunden ist. Die Datenverarbeitungseinheit 12 umfasst eine Serielle Schnittstelle (Serial-Peripheral Interface bzw. SPI-Master) und beispielsweise einen Mikrokontroller oder eine CPU oder dergleichen. Die Datenverarbeitungseinheit 12 ist baulich getrennt von der Sensoreinheit 14 angeordnet, das heißt die Datenverarbeitungseinheit 12 und die Sensoreinheit 14 weisen jeweils ein eigenes Gehäuse und/oder separate Platinen auf. Der Kommunikationskanal 20 kann als ein synchroner serieller Datenbus oder eine HDSL-Leitung oder dergleichen ausgebildet sein.

Die Sensoreinheit 14 verfügt über einen ersten Sensorkanal 16a und einen zweiten Sensorkanal 16b (z.B. SPI-Slaves) zum Erfassen erster und zweiter Prozessdaten oder Sensordaten eines sicherheitskritischen Prozesses. Die Sensorkanäle 16a, 16b weisen jeweils zumindest einen Sensor zum Erzeugen der Sensordaten auf (nicht gezeigt). Es kann aber auch ein gemeinsamer Sensor vorgesehen sein, der zum Erzeugen der verschiedenen Sensordaten auf unterschiedliche Art und Weise ausgelesen wird. Der Sensor bzw. die Sensoren sind beispielsweise ein linearer Encoder und/oder ein rotativer Encoder zum Erzeugen von Positionsinformationen, wobei die Positionsinformationen eine relative Position der Sensoranordnung 10 in Bezug auf ein Messobjekt angeben.

Der zweite Sensorkanal 16b weist eine Diagnoseeinheit 18 zum Erzeugen von Diagnoseinformationen auf. Die Diagnoseeinheit 18 kann als ein Mikrokontroller oder eine CPU oder dergleichen ausgebildet sein und einen eigenen Speicher aufweisen. Die Diagnoseinformationen geben an, ob die von den ersten und zweiten Sensorkanälen 16a, 16b erfassten ersten und zweiten Sensordaten im Wesentlichen übereinstimmen, oder ob ein Betrag der Differenz zwischen den ersten Sensordaten und den zweiten Sensordaten einen vorbestimmten Schwellenwert übersteigt. Der vorbestimmte Schwellenwert ist beispielsweise in dem Speicher der Diagnoseeinheit 18 gespeichert und kann Werte zwischen 0,01% und 25%, insbesondere 0,1% und 10%, insbesondere 1% und 5%, annehmen.

In einem Fall, in dem die Diagnoseeinheit 18 feststellt, dass die ersten und zweiten Sensordaten im Wesentlichen übereinstimmen, das heißt wenn die Differenz zwischen den ersten Sensordaten und den zweiten Sensordaten den vorbestimmten Schwellenwert nicht übersteigt, liegt kein Messfehler vor und der von der Sensoranordnung 10 zu überwachende sicherheitskritische Prozess läuft ungestört weiter. In einem Fall, in dem hingegen die Diagnoseeinheit 18 feststellt, dass die ersten und zweiten Sensordaten nicht im Wesentlichen übereinstimmen, das heißt wenn die Differenz zwischen den ersten Sensordaten und den zweiten Sensordaten den vorbestimmten Schwellenwert übersteigt, liegt ein Messfehler in mindestens einem der Sensorkanäle 16a, 16b vor, und es wird ermittelt, dass sich die Sensoreinheit 14 in einem nicht-sicheren Zustand befindet. In Reaktion darauf kann eine geeignete Abhilfemaßnahme eingeleitet werden.

Es versteht sich, dass der Abgleich der ersten und zweiten Sensordaten nicht auf den Vergleich der Differenz mit einem Schwellenwert beschränkt ist und die Abgleichmethode bedarfsgerecht entsprechend der erfassten Sensordaten gewählt werden kann. Zudem versteht es sich, dass anstelle des zweiten Sensorkanals 16b der erste Sensorkanal 16a die Diagnoseeinheit 18 umfassen kann.

Bei der in der Fig. 1 gezeigten Ausführungsform sendet die Datenverarbeitungseinheit 12 eine Sensordatenanfrage an den ersten Sensorkanal 16a. In Ansprechen darauf bzw. in Folge dessen überträgt der erste Sensorkanal 16a eigens erfasste erste Sensordaten an die Datenverarbeitungseinheit 12 sowie an den zweiten Sensorkanal 16b. Die Diagnoseeinheit 18 des zweiten Sensorkanals 18 gleicht dann die empfangenen ersten Sensordaten und die von dem zweiten Sensorkanal 16b erfassten zweiten Sensordaten wie zuvor beschrieben ab und sendet das Diagnoseergebnis an die Datenverarbeitungseinheit 12. Die Diagnoseinformationen können als ein binäres Signal oder als ein Schaltsignal übertragen werden, das die Datenverarbeitungseinheit 12 beim Empfang dazu veranlasst, einen Betriebszustand der Sensoranordnung 10 zu ändern. Das Ändern des Betriebszustands hat beispielsweise zur Folge, dass eine Abhilfemaßnahme in Bezug auf den sicherheitskritischen Prozess eingeleitet wird.

Der Crosscheck der ersten und zweiten Sensordaten ist daher von der Datenverarbeitungseinheit 12 in die Sensoreinheit 14 ausgelagert und es wird lediglich ein Satz Sensordaten und das bereits erzeugte Prüfergebnis an die Datenverarbeitungseinheit 12 übertragen. Dadurch wird die Rechenlast auf die Datenverarbeitungseinheit 12 sowie die Menge an von der Sensoreinheit 14 an die Datenverarbeitungseinheit 12 zu übertragenden Daten erheblich reduziert.

Der gesamte Datenaustausch zwischen der Datenverarbeitungseinheit 12 und den Sensorkanälen 16a, 16b findet über den gemeinsamen Kommunikationskanal 20 statt. Alternativ können die ersten Sensordaten und/oder die Diagnoseinformationen aber auch periodisch an die Datenverarbeitungseinheit 12 übertragen werden.

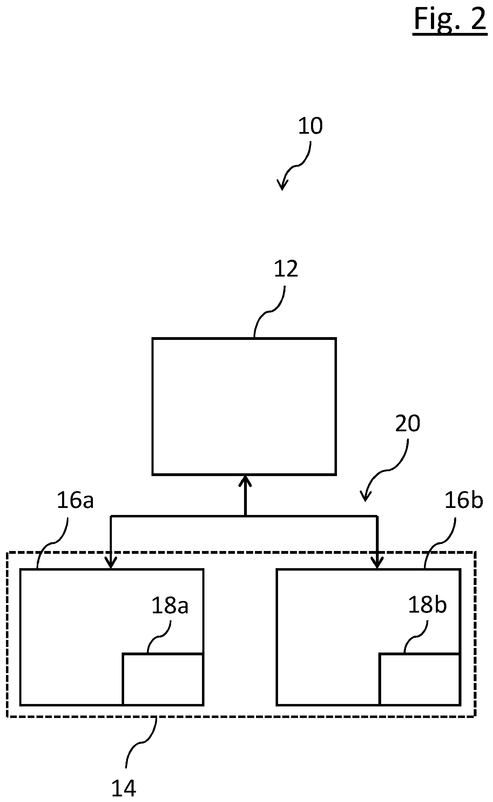

Die in der Fig. 2 gezeigte Ausführungsform einer nicht erfindungsgemäßen Sensoranordnung 10 unterscheidet sich von der in der Fig. 1 gezeigten im Wesentlichen dadurch, dass beide Sensorkanäle 16a, 16b eine Diagnoseeinheit 18a, 18b aufweisen.

Bei der in der Fig. 2 gezeigten Ausführungsform empfangen beide Sensorkanäle 16a, 16b eine Sensordatenanfrage von der Datenverarbeitungseinheit 12. **In** Reaktion darauf überträgt der erste Sensorkanal 16a eigens bzw. selbst erfasste erste Sensordaten an die Datenverarbeitungseinheit 12 und den zweiten Sensorkanal 16b. Ebenfalls in Reaktion auf das Empfangen der Sensordatenanfrage überträgt der zweite Sensorkanal 16b eigens erfasste zweite Sensordaten an den ersten Sensorkanal 16a.

Die Diagnoseeinheit 18a des ersten Sensorkanals 16a sowie die Diagnoseeinheit 18b des zweiten Sensorkanals 16b erzeugen dann jeweils erste und zweite Diagnoseinformationen, und der erste Sensorkanal 16a überträgt die ersten Diagnoseinformationen an die Datenverarbeitungseinheit 12 und der zweite Sensorkanal 16b überträgt die zweiten Diagnoseinformationen an die Datenverarbeitungseinheit 12. Das heißt die Sensordaten werden zweimal geprüft, was die Sicherheit zusätzlich erhöht. Zusätzlich ist es denkbar, dass die Datenverarbeitungseinheit 12 und/oder zumindest eine der Diagnoseeinheiten 18a, 18b dazu eingerichtet ist, einen Crosscheck der ersten und zweiten Diagnoseinformationen auszuführen.

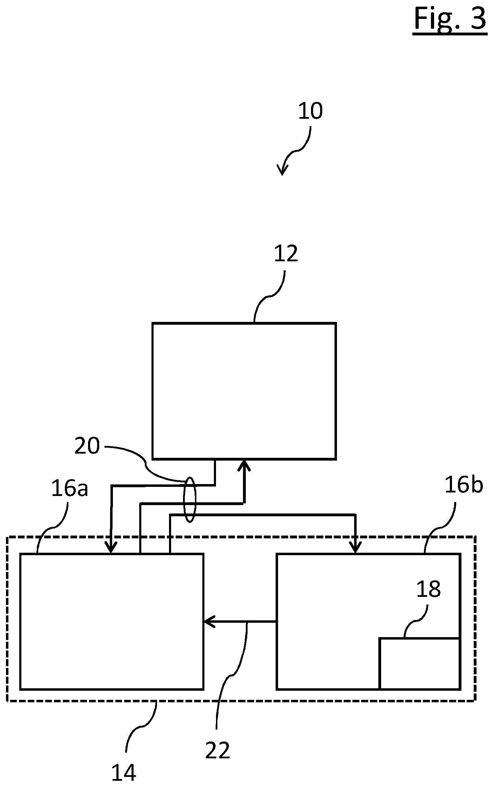

Die in der Fig. 3 gezeigte Ausführungsform einer erfindungsgemäßen Sensoranordnung 10 unterscheidet sich von der in der Fig. 1 gezeigten im Wesentlichen dadurch, dass der Datenaustausch zwischen der Datenverarbeitungseinheit 12 und der Sensoreinheit 14 über einen ersten Kommunikationskanal 20 und der Datenaustausch zwischen den Sensorkanälen 16a, 16b über einen zweiten Kommunikationskanal 22 erfolgt. Der erste Kommunikationskanal 20 ist hier rein schematisch durch drei Pfeile zwischen der Datenverarbeitungseinheit 12 und der Sensoreinheit 14 dargestellt.

Genauer erfolgt das Übertragen der Sensordatenanfrage von der Datenverarbeitungseinheit 12 an den ersten Sensorkanal 16a, das Übertragen der ersten Sensordaten von dem ersten Sensorkanal 16a an die Datenverarbeitungseinheit 12 und das Übertragen der ersten Sensordaten von dem ersten Sensorkanal 16a an den zweiten Sensorkanal 16b über den ersten Kommunikationskanal 20. Das Übertragen der von der Diagnoseeinheit 18 des zweiten Sensorkanals 16b erzeugten Diagnoseinformationen von dem zweiten Sensorkanal 16b an den ersten Sensorkanal 16a erfolgt über den zweiten Kommunikationskanal 22. Das Übertragen der Diagnoseinformationen von dem ersten Sensorkanal 16a an die Datenverarbeitungseinheit 12 erfolgt wiederum über den ersten Kommunikationskanal 20.

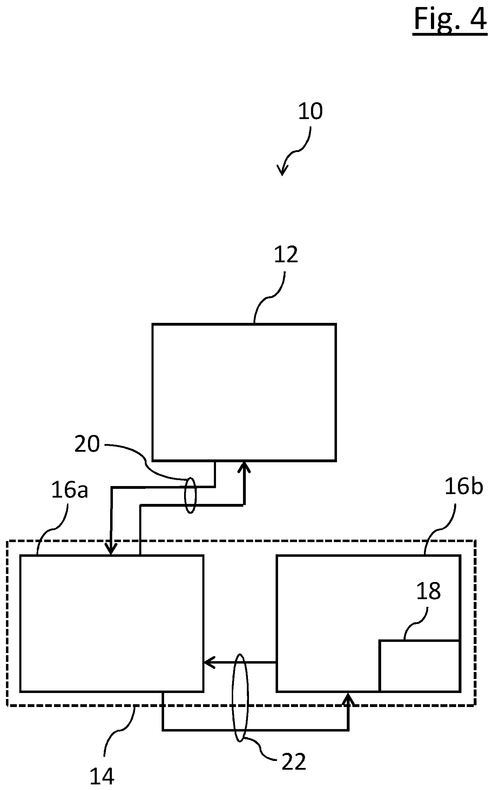

Die in der Fig. 4 gezeigte Ausführungsform einer erfindungsgemäßen Sensoranordnung 10 unterscheidet sich von der in der Fig. 3 gezeigten im Wesentlichen dadurch, dass das Übertragen der ersten Sensordaten von dem ersten Sensorkanal 16a an den zweiten Sensorkanal 16b nicht über den ersten Kommunikationskanal 20 sondern über den zweiten Kommunikationskanal 22 erfolgt. Der zweite Kommunikationskanal 22 ist hier schematisch durch zwei gegenläufige Pfeile zwischen den Sensorkanälen 16a, 16b im unteren Bildabschnitt dargestellt.

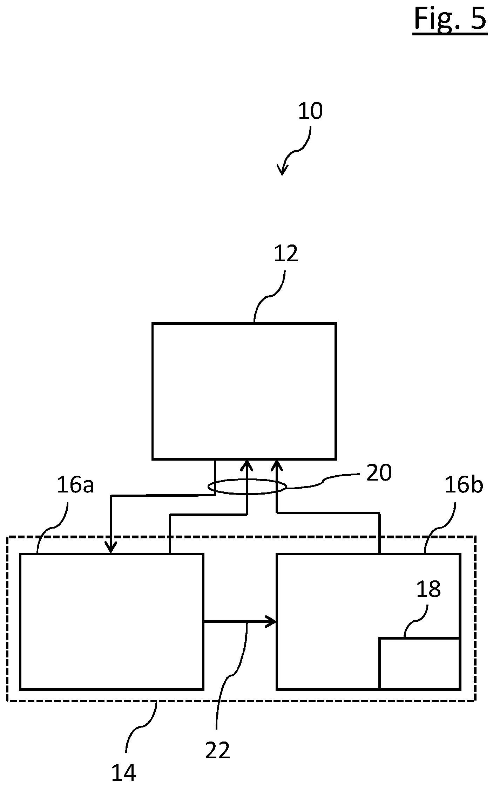

Die in der Fig. 5 gezeigte Ausführungsform einer erfindungsgemäßen Sensoranordnung 10 unterscheidet sich von der in der Fig. 4 gezeigten im Wesentlichen dadurch, dass der zweite Sensorkanal 16b, welcher über eine Diagnoseeinheit 18 verfügt, die erzeugten Diagnoseinformationen nicht an den ersten Sensorkanal 16a sondern direkt an die Datenverarbeitungseinheit 12 überträgt.

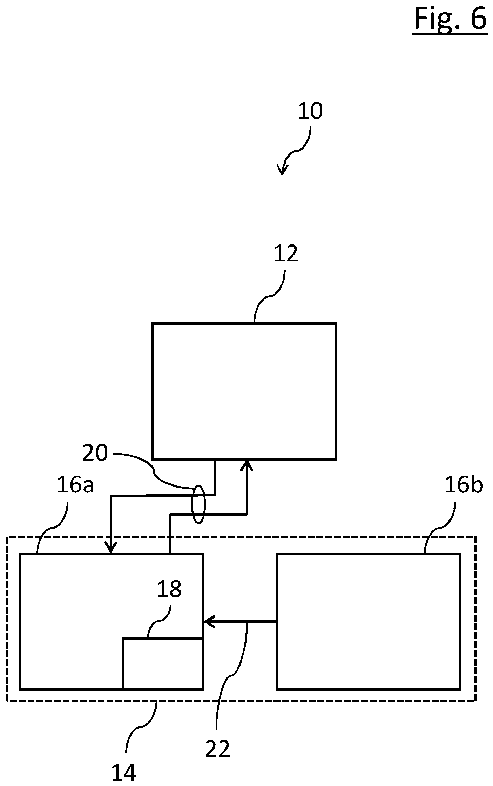

Die in der Fig. 6 gezeigte Ausführungsform einer erfindungsgemäßen Sensoranordnung 10 unterscheidet sich von der in Fig. 5 gezeigten im Wesentlichen dadurch, dass die Datenverarbeitungseinheit 12 nur mit dem die Diagnoseeinheit 18 aufweisenden (ersten) Sensorkanal 16a kommuniziert.

Genauer wird eine Sensordatenanfrage von der Datenverarbeitungseinheit 12 durch den ersten Sensorkanal 16a empfangen. In Reaktion darauf überträgt der erste Sensorkanal 16a eigens erfasste, erste Sensordaten an die Datenverarbeitungseinheit 12. Gleichzeitig oder zeitlich versetzt überträgt der zweite Sensorkanal 16b, welcher hier keine Diagnoseeinheit 18 umfasst, eigens erfasste zweite Sensordaten an den ersten Sensorkanal 16a. Daraufhin erzeugt die Diagnoseeinheit 18 des ersten Sensorkanals 16a Diagnoseinformationen, d.h. gleicht die ersten und zweiten Sensordaten wie zuvor beschrieben ab. Der erste Sensorkanal 16a überträgt dann das Diagnoseergebnis an die Datenverarbeitungseinheit 12.

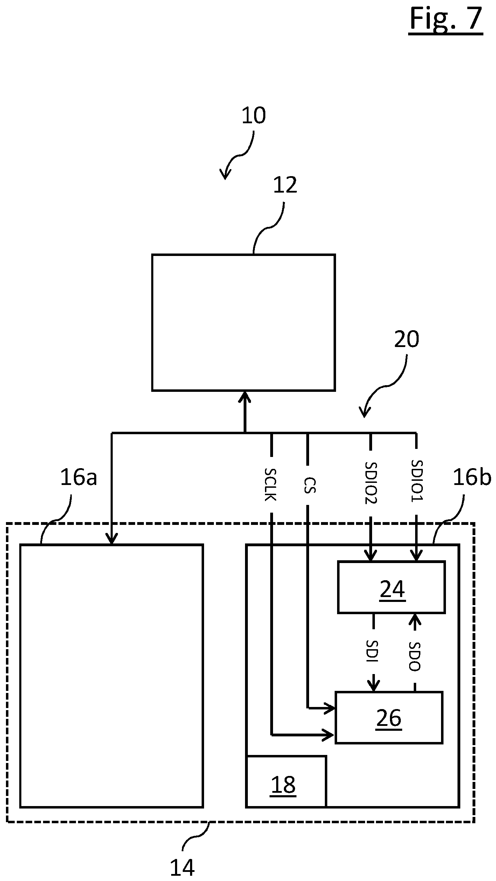

Die in der Fig. 7 dargestellte Sensoranordnung 10 weist eine SPI-Architektur auf, bei der die Datenverarbeitungseinheit 12 die Funktion eines SPI-Masters erfüllt und die Sensorkanäle 16a, 16b jeweils die Funktion eines SPI-Slaves erfüllen. Bei der gezeigten Ausführungsform weist der die Diagnoseeinheit 18 aufweisende, zweite Sensorkanal 16b eine SPI-Slave-Einheit 26 auf, welche einen ersten Eingang CS ("Chip Select") zum Empfangen einer Sensordatenanfrage von der Datenverarbeitungseinheit 12, einen zweiten Eingang SCLK zum Empfangen eines Clock-Signals von der Datenverarbeitungseinheit, einen dritten Eingang SDI zum Empfangen von (Sensor-)Daten, und einen Ausgang SDO zum Übertragen von (Sensor-)Daten aufweist. Die SPI-Slave-Einheit 26 erfüllt die Funktionen eines SPI-Slaves.

Der zweite Sensorkanal 16b weist des Weiteren Schaltmittel 24 in Form eines 2x2 Crossbar Switches auf, die dazu ausgebildet sind, um den dritten Eingang SDI und den Ausgang SDO des SPI 26 zu vertauschen, wenn die SPI-Slave-Einheit 26 nicht mit der Datenverarbeitungseinheit 12 kommuniziert. Die entsprechenden Ein- bzw. Ausgänge der Schaltmittel 24 sind entsprechend als SDIO1 und SDIO2 bezeichnet. Dadurch, d.h. bei einer Vertauschung durch die Schaltmittel 24, kann der aktive erste Sensorkanal 16a, welcher ebenfalls eine (nicht gezeigte) SPI-Slave-Einheit umfasst, Sensordaten an den passiven zweiten SPI-Slave 16b übertragen, was bei herkömmlichen SPI-Architekturen nicht möglich ist.

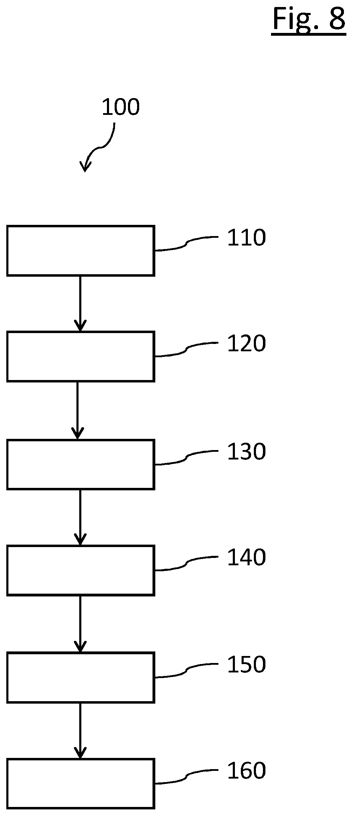

Die Fig. 8 zeigt einen schematischen Ablaufplan eines erfindungsgemäßen Verfahrens 100 zum Bereitstellen von Sensordaten und Diagnoseinformationen an eine Datenverarbeitungseinheit 12 einer Sensoranordnung 10 für sicherheitskritische Anwendungen. Das Verfahren beginnt mit Schritt 110, bei dem eine Sensordatenanfrage von der Datenverarbeitungseinheit 12 durch zumindest einen der Sensorkanäle 16a, 16b der Sensoreinheit 14 empfangen wird. In Schritt 120 werden erste und zweite Sensordaten von jeweils dem ersten und zweiten Sensorkanal 16a, 16b erfasst. In Schritt 130 werden Diagnoseinformationen auf Basis der ersten und zweiten Sensordaten durch zumindest eine Diagnoseeinheit 18, 18a, 18b, die integraler Bestandteil zumindest eines der Sensorkanäle 16a, 16b ist, erzeugt. In Schritt 140 werden die erzeugten Diagnoseinformationen an die Datenverarbeitungseinheit 12 durch zumindest einen der Sensorkanäle 16a, 16b übertragen. In Schritt 150 werden die ersten Sensordaten oder die zweiten Sensordaten an die Datenverarbeitungseinheit 12 durch zumindest einen der Sensorkanäle 16a, 16b oder nur einen der Sensorkanäle 16a, 16b übertragen. Insbesondere werden nicht die ersten und die zweiten Sensordaten an die Datenverarbeitungseinheit 12 übertragen. In Schritt 160 ermittelt die Datenverarbeitungseinheit 12, ob sich die Sensoreinheit 14 in einem sicheren oder einem nicht-sicheren Zustand befindet. Ein nicht-sicherer Zustand liegt insbesondere dann vor, wenn die Diagnoseinformationen angeben, dass ein Messfehler vorliegt. In Reaktion darauf kann die Sensoranordnung 10, insbesondere die Datenverarbeitungseinheit 12, eine Abhilfemaßnahme in Bezug auf den sicherheitskritischen Prozess einleiten.

Es versteht sich, dass die Erfindung der Einfachheit halber nur beispielhaft anhand zweier Sensorkanäle 16a, 16b beschrieben wird und dass die Sensoreinheit 14 mehr als zwei Sensorkanäle 16a, 16b umfassen kann. Die Sensoranordnung kann beispielsweise eine kaskadierte SPI-Architektur mit drei oder mehr Sensorkanälen 16 aufweisen, bei der jedoch nur Sensordaten eines einzigen Sensorkanals 16 und Diagnoseinformationen an die Datenverarbeitungseinheit 12 übertragen werden.

Es versteht sich zudem, dass Merkmale oder Merkmalskomplexe, die in Bezug auf bestimmte Ausführungsformen beschrieben wurden, mit Merkmalen oder Merkmalskomplexen jeweils anderer Ausführungsformen kombiniert werden können.

### Bezugszeichenliste:

- 10: Sensoranordnung
- 12: Datenverarbeitungseinheit
- 14: Sensoreinheit
- 16a, 16b: Sensorkanäle
- 18: Diagnoseeinheit
- 20, 22: Kommunikationskanäle
- 24: Schaltmittel
- 26: SPI-Slave-Einheit

## Patentansprüche

1. Sensoranordnung (10) für sicherheitskritische Anwendungen, umfassend eine Datenverarbeitungseinheit (12), die mit einer Sensoreinheit (14) verbunden ist,
wobei die Sensoreinheit (14) zumindest zwei Sensorkanäle (16a, 16b) zum Erfassen erster und zweiter Sensordaten und eine Diagnoseeinheit (18) zum Erzeugen von Diagnoseinformationen auf Basis der ersten und zweiten Sensordaten umfasst,
wobei der zweite Sensorkanal (16b) der zumindest zwei Sensorkanäle (16a, 16b) die Diagnoseeinheit (18) umfasst, und
wobei der zweite Sensorkanal (16a, 16b) dazu eingerichtet und ausgebildet ist, die Diagnoseinformationen an die Datenverarbeitungseinheit (12) zu übertragen,
**dadurch gekennzeichnet, dass**
der erste Sensorkanal (16a) der zumindest zwei Sensorkanäle (16a, 16b) keine Diagnoseeinheit (18) umfasst, und
dass die Diagnoseeinheit (18) des zweiten Sensorkanals (16b) dazu eingerichtet und ausgebildet ist, die ersten Sensordaten und die zweiten Sensordaten an die Datenverarbeitungseinheit (12) zu übertragen.

2. Sensoranordnung (10) nach Anspruch 1,
wobei der zweite Sensorkanal (16b) dazu eingerichtet und ausgebildet ist, die ersten Sensordaten oder die zweiten Sensordaten und die Diagnoseinformationen an die Datenverarbeitungseinheit (12) zu übertragen.

3. Sensoranordnung (10) nach Anspruch 1,
wobei der erste Sensorkanal (16a) dazu eingerichtet und ausgebildet ist, die ersten Sensordaten oder die zweiten Sensordaten und die Diagnoseinformationen an die Datenverarbeitungseinheit (12) zu übertragen.

4. Sensoranordnung (10) nach Anspruch 1,
wobei der zweite Sensorkanal (16b) dazu eingerichtet und ausgebildet ist, die ersten Sensordaten oder die zweiten Sensordaten an die Datenverarbeitungseinheit (12) zu übertragen, und wobei der erste Sensorkanal (16a) dazu eingerichtet und ausgebildet ist, die Diagnoseinformationen an die Datenverarbeitungseinheit (12) zu übertragen.

5. Sensoranordnung (10) nach Anspruch 1,
wobei der zweite Sensorkanal (16b) dazu eingerichtet und ausgebildet ist, die Diagnoseinformationen an die Datenverarbeitungseinheit (12) zu übertragen, und wobei der erste Sensorkanal (16a) dazu eingerichtet und ausgebildet ist, die ersten Sensordaten oder die zweiten Sensordaten an die Datenverarbeitungseinheit (12) zu übertragen.

6. Sensoranordnung (10) nach zumindest einem der vorherigen Ansprüche, wobei die Datenverarbeitungseinheit (12) und die Sensoreinheit (14) separate Einheiten sind, insbesondere wobei die Datenverarbeitungseinheit (12) und die Sensoreinheit (14) jeweils ein eigenes Gehäuse aufweisen.

7. Sensoranordnung (10) nach zumindest einem der vorherigen Ansprüche, wobei der erste und/oder zweite Sensorkanal (16a, 16b) einen Sensor zum Erzeugen der ersten und/oder zweiten Sensordaten umfasst, insbesondere wobei der erste und/oder zweite Sensorkanal (16a, 16b) einen linearen Encoder und/oder einen rotativen Encoder zum Erzeugen von Positionsinformationen umfasst.

8. Sensoranordnung (10) nach zumindest einem der vorherigen Ansprüche, wobei die Diagnoseeinheit (18) dazu eingerichtet und ausgebildet ist, die Diagnoseinformationen als ein binäres Signal oder als ein Schaltsignal zu erzeugen, das die Datenverarbeitungseinheit (12) beim Empfang dazu veranlasst, einen Betriebszustand der Sensoranordnung (10) zu ändern.

9. Sensoranordnung (10) nach zumindest einem der vorherigen Ansprüche, wobei die Diagnoseeinheit (18) dazu eingerichtet und ausgebildet ist, die Diagnoseinformationen durch Abgleichen der ersten und zweiten Sensordaten zu erzeugen, insbesondere wobei in einem Fall, in dem eine Abweichung zwischen den ersten und zweiten Sensordaten einen vorbestimmten Schwellenwert überschreitet, die Diagnoseinformationen einen Fehler angeben und in einem Fall, in dem eine Abweichung zwischen den ersten und zweiten Sensordaten den vorbestimmten Schwellenwert nicht überschreitet, die Diagnoseinformationen angeben, dass kein Fehler vorliegt.

10. Sensoranordnung (10) nach zumindest einem der vorherigen Ansprüche, wobei der erste und/oder zweite Sensorkanal (16a, 16b) dazu eingerichtet und ausgebildet ist, die ersten Sensordaten oder die zweiten Sensordaten in Reaktion auf ein Empfangen einer Sensordatenanfrage von der Datenverarbeitungseinheit (12) an die Datenverarbeitungseinheit (12) zu übertragen, oder die ersten Sensordaten oder die zweiten Sensordaten wiederholt an die Datenverarbeitungseinheit (12) zu übertragen, insbesondere in vorbestimmen Zeitabständen.

11. Sensoranordnung (10) nach zumindest einem der vorherigen Ansprüche, wobei die Datenverarbeitungseinheit (12) und die Sensoreinheit (14) und/oder die zumindest zwei Sensorkanäle (16a, 16b) über einen Kommunikationskanal (20), insbesondere über einen synchronen seriellen Datenbus, eine HDSL-Leitung und/oder über eine Punkt-zu-Punkt-Kommunikation miteinander verbunden sind.

12. Sensoranordnung (10) nach zumindest einem der vorherigen Ansprüche, wobei die Datenverarbeitungseinheit (12) und die Sensoreinheit (14) und die zumindest zwei Sensorkanäle (16a, 16b) über denselben Kommunikationskanal (20) oder über separate Kommunikationskanäle (20, 22) miteinander verbunden sind.

13. Sensoranordnung (10) nach zumindest einem der vorherigen Ansprüche, wobei die Sensoreinheit (14) mehr als zwei, insbesondere drei oder mehr, Sensorkanäle (16a, 16b) umfasst, wobei zumindest einer der Sensorkanäle (16a, 16b) eine Diagnoseeinheit (18) zum Erzeugen von Diagnoseinformationen auf Basis eigens erfasster Sensordaten und zumindest einem weiteren Satz Sensordaten, die von einem anderen Sensorkanal (16a, 16b) erfasst wurden, umfasst.

14. Verfahren (100) zum Bereitstellen von Sensordaten und Diagnoseinformationen an eine Datenverarbeitungseinheit (12) einer Sensoranordnung (10) für sicherheitskritische Anwendungen,
die Sensoranordnung (10) umfassend eine Datenverarbeitungseinheit (12), die mit einer Sensoreinheit (14) verbunden ist,
wobei die Sensoreinheit (14) zumindest zwei Sensorkanäle (16a, 16b) und eine Diagnoseeinheit (18) umfasst,
wobei der zweite Sensorkanal (16b) der zumindest zwei Sensorkanäle (16a, 16b) die Diagnoseeinheit (18) umfasst, und
wobei der erste Sensorkanal (16a) der zumindest zwei Sensorkanäle (16a, 16b) keine Diagnoseeinheit (18) umfasst,
das Verfahren umfassend:
Erfassen (120) von ersten und zweiten Sensordaten durch die zwei Sensorkanäle (16a, 16b) der Sensoreinheit (14) der Sensoranordnung (10);
Erzeugen (130) von Diagnoseinformationen auf Basis der ersten und zweiten Sensordaten durch die Diagnoseeinheit (18); und
Übertragen (140) der Diagnoseinformationen an die Datenverarbeitungseinheit (12) durch den zweiten Sensorkanal (16b),
Übertragen (150) der ersten Sensordaten und der zweiten Sensordaten an die Datenverarbeitungseinheit (12) durch die Diagnoseeinheit (18).

15. Verfahren (100) nach Anspruch 14, ferner umfassend
Empfangen (110) einer Sensordatenanfrage von der Datenverarbeitungseinheit (12) durch zumindest einen der Sensorkanäle (16a, 16b), wobei das Übertragen der ersten Sensordaten oder der zweiten Sensordaten an die Datenverarbeitungseinheit (12) durch einen der Sensorkanäle (16a, 16b) in Reaktion auf das Empfangen der Sensordatenanfrage erfolgt.

## Claims

1. A sensor arrangement (10) for safety-critical applications, comprising a data processing unit (12) which is connected to a sensor unit (14);
wherein the sensor unit (14) comprises at least two sensor channels (16a, 16b) for detecting first and second sensor data and a diagnostic unit (18) for generating diagnostic information on the basis of the first and second sensor data,
wherein the second sensor channel (16b) of the at least two sensor channels (16a, 16b) comprises the diagnostic unit (18), and
wherein the second sensor channel (16a, 16b) is set up and configured to transmit the diagnostic information to the data processing unit (12),
**characterized in that**
the first sensor channel (16a) of the at least two sensor channels (16a, 16b) does not comprise a diagnostic unit (18), and
**in that** the diagnostic unit (18) of the second sensor channel (16b) is set up and configured to transmit the first sensor data and the second sensor data to the data processing unit (12).

2. A sensor arrangement (10) according to claim 1,
wherein the second sensor channel (16b) is set up and configured to transmit the first sensor data or the second sensor data and the diagnostic information to the data processing unit (12).

3. A sensor arrangement (10) according to claim 1,
wherein the first sensor channel (16a) is set up and configured to transmit the first sensor data or the second sensor data and the diagnostic information to the data processing unit (12).

4. A sensor arrangement (10) according to claim 1,
wherein the second sensor channel (16b) is set up and configured to transmit the first sensor data or the second sensor data to the data processing unit (12), and wherein the first sensor channel (16a) is set up and configured to transmit the diagnostic information to the data processing unit (12).

5. A sensor arrangement (10) according to claim 1,
wherein the second sensor channel (16b) is set up and configured to transmit the diagnostic information to the data processing unit (12), and wherein the first sensor channel (16a) is set up and configured to transmit the first sensor data or the second sensor data to the data processing unit (12).

6. A sensor arrangement (10) according to at least one of the preceding claims,
wherein the data processing unit (12) and the sensor unit (14) are separate units, in particular wherein the data processing unit (12) and the sensor unit (14) each have their own housing.

7. A sensor arrangement (10) according to at least one of the preceding claims,
wherein the first and/or second sensor channel (16a, 16b) comprises/comprise a sensor for generating the first and/or second sensor data, in particular wherein the first and/or second sensor channel (16a, 16b) comprises/comprise a linear encoder and/or a rotary encoder for generating position information.

8. A sensor arrangement (10) according to at least one of the preceding claims,
wherein the diagnostic unit (18) is set up and configured to generate the diagnostic information as a binary signal or as a switching signal which, upon reception, causes the data processing unit (12) to change an operating state of the sensor arrangement (10).

9. A sensor arrangement (10) according to at least one of the preceding claims,
wherein the diagnostic unit (18) is set up and configured to generate the diagnostic information by comparing the first and second sensor data, in particular wherein, in a case in which a deviation between the first and second sensor data exceeds a predetermined threshold value, the diagnostic information indicates a fault and, in a case in which a deviation between the first and second sensor data does not exceed the predetermined threshold value, the diagnostic information indicates that there is no fault.

10. A sensor arrangement (10) according to at least one of the preceding claims,
wherein the first and/or second sensor channel (16a, 16b) is/are set up and configured to transmit the first sensor data or the second sensor data to the data processing unit (12) in response to receiving a sensor data query from the data processing unit (12), or to transmit the first sensor data or the second sensor data repeatedly to the data processing unit (12), in particular at predetermined time intervals.

11. A sensor arrangement (10) according to at least one of the preceding claims,
wherein the data processing unit (12) and the sensor unit (14) and/or the at least two sensor channels (16a, 16b) are connected to one another via a communication channel (20), in particular via a synchronous serial data bus, an HDSL line and/or a point-to-point communication.

12. A sensor arrangement (10) according to at least one of the preceding claims,
wherein the data processing unit (12) and the sensor unit (14) and the at least two sensor channels (16a, 16b) are connected to one another via the same communication channel (20) or via separate communication channels (20, 22).

13. A sensor arrangement (10) according to at least one of the preceding claims,
wherein the sensor unit (14) comprises more than two, in particular three or more, sensor channels (16a, 16b), wherein at least one of the sensor channels (16a, 16b) comprises a diagnostic unit (18) for generating diagnostic information on the basis of separately acquired sensor data and at least one further set of sensor data that were acquired by another sensor channel (16a, 16b).

14. A method (100) for providing sensor data and diagnostic information to a data processing unit (12) of a sensor arrangement (10) for safety-critical applications,
the sensor arrangement (10) comprising a data processing unit (12) which is connected to a sensor unit (14),
wherein the sensor unit (14) comprises at least two sensor channels (16a, 16b) and a diagnostic unit (18),
wherein the second sensor channel (16b) of the at least two sensor channels (16a, 16b) comprises the diagnostic unit (18), and
wherein the first sensor channel (16a) of the at least two sensor channels (16a, 16b) does not comprise a diagnostic unit (18),
the method comprising:
acquiring (120) first and second sensor data by means of the two sensor channels (16a, 16b) of the sensor unit (14) of the sensor arrangement (10);
generating (130) diagnostic information on the basis of the first and second sensor data by means of the diagnostic unit (18); and
transmitting (140) the diagnostic information to the data processing unit (12) by means of the second sensor channel (16b),
transmitting (150) the first sensor data and the second sensor data to the data processing unit (12) by means of the diagnostic unit (18).

15. A method (100) according to claim 14, further comprising
receiving (110) a sensor data query from the data processing unit (12) by means of at least one of the sensor channels (16a, 16b), wherein the transmission of the first sensor data or the second sensor data to the data processing unit (12) by one of the sensor channels (16a, 16b) takes place in response to receiving the sensor data query.

## Revendications

1. Ensemble capteur (10) pour des applications critiques en termes de sécurité, comprenant une unité de traitement de données (12) qui est reliée à une unité de capteur (14),
dans lequel
l'unité de capteur (14) comporte au moins deux canaux de capteur (16a, 16b) destinés à acquérir des premières et deuxièmes données de capteur, et une unité de diagnostic (18) destinée à générer des informations de diagnostic en se basant sur les premières et deuxièmes données de capteur, le deuxième canal de capteur (16b) desdits au moins deux canaux de capteur (16a, 16b) comprend l'unité de diagnostic (18), et
le deuxième canal de capteur (16a, 16b) est conçu et réalisé pour transmettre les informations de diagnostic à l'unité de traitement de données (12),
**caractérisé en ce que**
le premier canal de capteur (16a) desdits au moins deux canaux de capteur (16a, 16b) ne comprend pas d'unité de diagnostic (18), et
**en ce que** l'unité de diagnostic (18) du deuxième canal de capteur (16b) est conçue et réalisée pour transmettre les premières données de capteur ou les deuxièmes données de capteur à l'unité de traitement de données (12).

2. Ensemble capteur (10) selon la revendication 1,
dans lequel le deuxième canal de capteur (16b) est conçu et réalisé pour transmettre les premières données de capteur ou les deuxièmes données de capteur et les informations de diagnostic à l'unité de traitement de données (12).

3. Ensemble capteur (10) selon la revendication 1,
dans lequel le premier canal de capteur (16a) est conçu et réalisé pour transmettre les premières données de capteur ou les deuxièmes données de capteur et les informations de diagnostic à l'unité de traitement de données (12).

4. Ensemble capteur (10) selon la revendication 1,
dans lequel le deuxième canal de capteur (16b) est conçu et réalisé pour transmettre les premières données de capteur ou les deuxièmes données de capteur à l'unité de traitement de données (12), et le premier canal de capteur (16a) est conçu et réalisé pour transmettre les informations de diagnostic à l'unité de traitement de données (12).

5. Ensemble capteur (10) selon la revendication 1,
dans lequel le deuxième canal de capteur (16b) est conçu et réalisé pour transmettre les informations de diagnostic à l'unité de traitement de données (12), et le premier canal de capteur (16a) est conçu et réalisé pour transmettre les premières données de capteur ou les deuxièmes données de capteur à l'unité de traitement de données (12).

6. Ensemble capteur (10) selon l'une au moins des revendications précédentes,
dans lequel l'unité de traitement de données (12) et l'unité de capteur (14) sont des unités séparées, en particulier l'unité de traitement de données (12) et l'unité de capteur (14) ont chacune leur propre boîtier.

7. Ensemble capteur (10) selon l'une au moins des revendications précédentes,
dans lequel le premier et/ou le deuxième canal de capteur (16a, 16b) comprend un capteur destiné à générer les premières et/ou les deuxièmes données de capteur,
en particulier, le premier et/ou le deuxième canal de capteur (16a, 16b) comprend un codeur linéaire et/ou un codeur rotatif destiné à générer des informations de position.

8. Ensemble capteur (10) selon l'une au moins des revendications précédentes,
dans lequel l'unité de diagnostic (18) est conçue et réalisée pour générer les informations de diagnostic sous la forme d'un signal binaire ou d'un signal de commutation qui, à sa réception, incite l'unité de traitement de données (12) à modifier un état de fonctionnement de l'ensemble capteur (10).

9. Ensemble capteur (10) selon l'une au moins des revendications précédentes,
dans lequel l'unité de diagnostic (18) est conçue et réalisée pour générer les informations de diagnostic en comparant les premières et deuxièmes données de capteur,
en particulier, dans le cas où un écart entre les premières et deuxièmes données de capteur dépasse une valeur seuil prédéterminée, les informations de diagnostic indiquent une erreur et, dans le cas où un écart entre les premières et deuxièmes données de capteur ne dépasse pas la valeur seuil prédéterminée, les informations de diagnostic indiquent qu'il n'y a pas d'erreur.

10. Ensemble capteur (10) selon l'une au moins des revendications précédentes,
dans lequel le premier et/ou le deuxième canal de capteur (16a, 16b) est conçu et réalisé pour transmettre les premières données de capteur ou les deuxièmes données de capteur à l'unité de traitement de données (12) en réponse à la réception d'une demande de données de capteur provenant de l'unité de traitement de données (12), ou pour transmettre de manière répétée les premières données de capteur ou les deuxièmes données de capteur à l'unité de traitement des données (12), en particulier à des intervalles de temps prédéterminés.

11. Ensemble capteur (10) selon l'une au moins des revendications précédentes,
dans lequel l'unité de traitement des données (12) et l'unité de capteur (14) et/ou lesdits au moins deux canaux de capteur (16a, 16b) sont reliés entre eux par un canal de communication (20), en particulier par un bus de données série synchrone, une ligne HDSL et/ou une communication point à point.

12. Ensemble capteur (10) selon l'une au moins des revendications précédentes,
dans lequel l'unité de traitement de données (12) et l'unité de capteur (14) et lesdits au moins deux canaux de capteur (16a, 16b) sont reliés entre eux par le même canal de communication (20) ou par des canaux de communication séparés (20, 22).

13. Ensemble capteur (10) selon l'une au moins des revendications précédentes,
dans lequel l'unité de capteur (14) comprend plus de deux canaux de capteur (16a, 16b), en particulier trois ou plus, l'un au moins des canaux de capteur (16a, 16b) comprenant une unité de diagnostic (18) destinée à générer des informations de diagnostic en se basant sur des données de capteur acquises spécialement et sur au moins un autre enregistrement de données de capteur acquises par un autre canal de capteur (16a, 16b).

14. Procédé (100) pour fournir des données de capteur et des informations de diagnostic à une unité de traitement de données (12) d'un ensemble capteur (10) pour des applications critiques en termes de sécurité, l'ensemble capteur (10) comportant une unité de traitement de données (12) reliée à une unité de capteur (14),
l'unité de capteur (14) comprenant au moins deux canaux de capteur (16a, 16b) et une unité de diagnostic (18),
le deuxième canal de capteur (16b) desdits au moins deux canaux de capteur (16a, 16b) comprenant l'unité de diagnostic (18), et
le premier canal de capteur (16a) desdits au moins deux canaux de capteur (16a, 16b) ne comprenant pas d'unité de diagnostic (18),
le procédé consistant à :
acquérir (120) des premières et deuxièmes données de capteur par les deux canaux de capteur (16a, 16b) de l'unité de capteur (14) de l'ensemble capteur (10) ;
générer (130) des informations de diagnostic en se basant sur les premières et deuxièmes données de capteur par l'unité de diagnostic (18) ; et
transmettre (140) les informations de diagnostic à l'unité de traitement de données (12) par le deuxième canal de capteur (16b),
transmettre (150) les premières données de capteur et des deuxièmes données de capteur à l'unité de traitement de données (12) par l'unité de diagnostic (18).

15. Procédé (100) selon la revendication 14, consistant en outre à
recevoir (110) une demande de données de capteur provenant de l'unité de traitement de données (12) par l'un au moins des canaux de capteur (16a, 16b), la transmission des premières données de capteur ou des deuxièmes données de capteur à l'unité de traitement de données (12) par l'un des canaux de capteur (16a, 16b) étant mise en œuvre en réponse à la réception de la demande de données de capteur.
